# DEMANDE DE BREVET EUROPEEN

(11) **EP 2 886 078 A1**
(43) Date de publication de la demande: **24.06.2015**
(21) Numéro de dépôt: 14004297.9
(22) Date de dépôt: 18.12.2014
(51) Int. Cl.: A61C 8/00

(54) **Système implantaire dentaire**

(30) Priorité: 18.12.2013 FR 1302992
(71) Demandeur: M'Gaides, Didier, 13300 Salon de Provence (FR)
(72) Inventeur: M'Gaides, Didier, 13300 Salon de Provence (FR)
(74) Mandataire: Barbot, Willy

(57) **Abrégé**

Système implantaire dentaire (100) de reconstruction dentaire comprenant une partie endo-osseuse (1) et une partie intermédiaire (3,4), où la partie endo-osseuse (1) comprend une glissière (1) présentant une section, sensiblement en forme de U, comprenant un fond (10) et deux montants (11,12) chacun respectivement connecté à une extrémité (17,18) du fond (10) par son extrémité proximale et prolongé à son extrémité distale (19,20) par un rebord (13,14) rentrant, les deux rebords (13,14) étant sensiblement en regard et laissant entre eux une ouverture (15) ; ainsi qu'un dispositif comprenant un tel système implantaire dentaire (100) et une couronne (5,6).

## Description

La présente invention concerne un système implantaire dentaire et plus particulièrement un système implantaire dentaire destinée à être implanté dans l'os maxillaire ou mandibulaire d'un patient.

Dans le domaine des systèmes implantaires dentaires, il est connu de réaliser un système implantaire dentaire comprenant typiquement deux parties. Un tel système implantaire dentaire comprend typiquement, de l'apicale à la plus coronaire, une partie endo-osseuse puis une partie intermédiaire, partie intermédiaire sur laquelle vient se fixer une couronne.

La partie endo-osseuse, encore dénommée implant, est destinée à être placée dans un logement pratiqué et aménagé à cet effet dans l'os maxillaire ou mandibulaire du patient. La partie endo-osseuse est typiquement enfouie et invisible. Selon l'art antérieur un implant se présente comme une vis qui est mise en place dans un trou pratiqué dans l'os. Il est classiquement employé un implant séparé pour chaque couronne.

La partie intermédiaire fait suite à la partie endo-osseuse. Elle peut encore être décomposée en une partie trans-muqueuse et une connexion prothétique. La partie trans-muqueuse sert d'une part d'entretoise afin de régler le positionnement en hauteur de la couronne et est d'autre part, sur sa périphérie, en interface avec la muqueuse gingivale. La partie trans-muqueuse est au moins partiellement masquée par la muqueuse gingivale. La connexion prothétique fait suite à la partie trans-muqueuse et forme une extrémité proéminente opposée, destinée à accueillir une couronne.

La couronne est la partie émergée et visible. Elle remplace la dent reconstruite dans ses fonctions masticatoire et esthétique.

Si différents types de systèmes implantaires dentaires reprenant cette structure sont connus, une localisation au niveau de l'os maxillaire ou mandibulaire d'un patient constitue un problème pour ceux-ci du fait de la faible profondeur d'os disponible, laquelle faible profondeur rend l'implantation tout à la fois délicate et fragile voir impossible.

Pour solutionner ce problème, il est proposé selon l'invention, de réaliser un système implantaire dentaire dont la partie endo-osseuse comprend une glissière présentant une section, sensiblement en forme de U, comprenant un fond et deux montants chacun respectivement connecté à une extrémité du fond par son extrémité proximale et prolongé à son extrémité distale par un rebord rentrant, les deux rebords étant sensiblement en regard et laissant entre eux une ouverture.

De la sorte, le système implantaire dentaire selon l'invention permet d'effectuer une implantation avec une épaisseur d'os disponible inférieur à 8 millimètres, et même inférieure à 6 millimètres.

Selon une autre caractéristique de l'invention, la glissière présente une longueur permettant d'accueillir au moins deux couronnes.

Selon une autre caractéristique de l'invention, la glissière présente une courbure selon sa longueur, afin de pouvoir s'adapter à une partie courbe d'une arcade maxillaire ou mandibulaire.

Selon une autre caractéristique de l'invention, la glissière est monobloc.

Selon une autre caractéristique de l'invention, la glissière est composée de maillons articulés.

Selon une autre caractéristique de l'invention, le fond et/ou au moins un montant est ajouré, de manière à faciliter l'ostéo intégration.

Selon une autre caractéristique de l'invention, la partie intermédiaire comprend au moins un coulisseau comportant au moins une face sensiblement plane limitée dans le plan de cette face par un contour externe présentant une plus grande dimension supérieure à la largeur de l'ouverture et une plus petite dimension, inférieure à la largeur de l'ouverture, et comportant encore, sensiblement au centre dudit contour externe, une partie filetée, d'axe sensiblement perpendiculaire à la face.

Selon une autre caractéristique de l'invention, la plus grande dimension est encore supérieure à la distance entre les montants.

Selon une autre caractéristique de l'invention, la partie intermédiaire comprend encore, pour chaque coulisseau, un support, sensiblement de révolution, comportant à une extrémité une face sensiblement plane, limitée dans le plan de cette face par un contour externe présentant une plus grande dimension supérieure à la largeur de l'ouverture, et sensiblement au centre dudit contour externe une partie filetée, d'axe sensiblement perpendiculaire à ladite face, complémentaire de la partie filetée du coulisseau, et à une autre extrémité une interface prothétique.

Selon une autre caractéristique de l'invention, un support comprend encore, entre ses deux extrémités, une partie filetée, d'axe sensiblement confondu avec l'axe de révolution du support, de diamètre nominal sensiblement égal à la largeur de la glissière.

Selon une autre caractéristique de l'invention, le système implantaire dentaire comprend encore un bouchon comportant un moyen de fixation apte à être fixé sur une interface prothétique du support.

Un autre objet de l'invention porte sur un dispositif comprenant un système implantaire dentaire tel que décrit précédemment et au moins une couronne.

Selon une autre caractéristique de l'invention, le dispositif comprend encore une couronne comportant un moyen de fixation apte à être fixé sur une interface prothétique du support et une partie émergente apte à remplacer une dent.

Un avantage important du dispositif selon l'invention est obtenu par la communalisation en une pièce unique de la partie endo-osseuse de plusieurs couronnes, qui lui confère une solidité et une solidarisation avec la mâchoire augmentée.

D'autres caractéristiques, détails et avantages de l'invention ressortiront plus clairement de la description détaillée donnée ci-après à titre indicatif en relation avec des dessins sur lesquels :
- la figure 1 illustre en vue transversale coupée une glissière mise en place dans un os maxillaire ou mandibulaire,
- les figures 2 et 3 illustrent en vue perspective un maillon de glissière,
- la figure 4 illustre en vue perspective un coulisseau,
- les figures 5a et 5b illustrent en vue perspective et en coupe respectivement un support,
- la figure 6 illustre en vue perspective un bouchon,
- la figure 7 illustre en vue de profil un assemblage comprenant une glissière, un coulisseau et un support,
- la figure 8 illustre en vue perspective un système implantaire dentaire composé d'une glissière de quatre maillons et deux coulisseaux associés chacun à un support et à un bouchon.

L'invention propose un nouveau paradigme de fixation d'un système implantaire dentaire 100 dans l'os 7 maxillaire ou mandibulaire. L'art antérieur propose une partie endo-osseuse de révolution et présentant côté os une interface filetée apte à être solidarisée avec l'os par vissage dans un trou complémentaire, sensiblement cylindrique ou conique. Une telle vis monodentaire nécessite une longueur minimale de pénétration. Les implants actuels les plus courts présentent une longueur filetée d'au moins 6 mm et s'accompagnent d'une indication de pose très limitée. Il est en conséquence nécessaire de disposer d'une profondeur osseuse au moins supérieure.

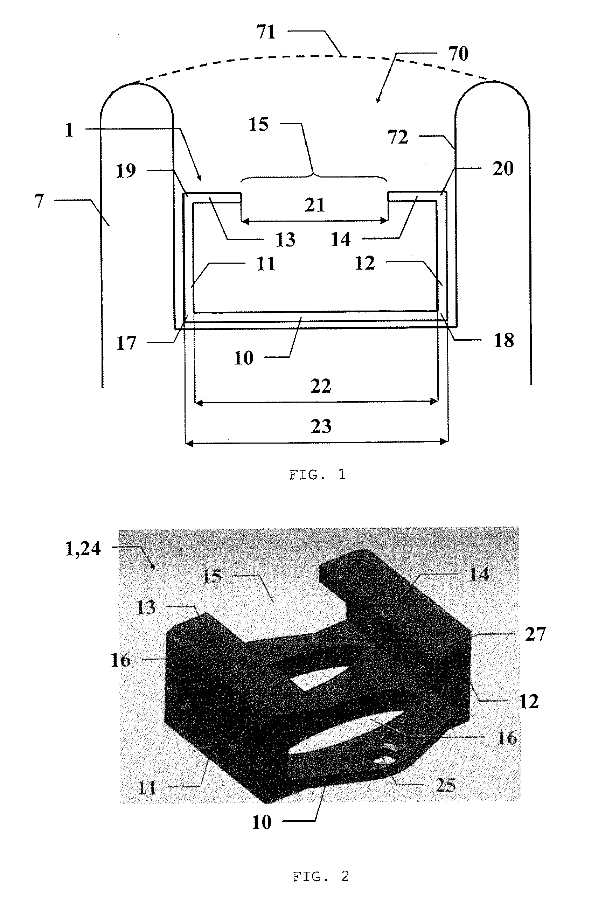

Au contraire l'invention propose d'employer un tout autre principe illustré à la figure 1. Selon l'invention, la partie endo-osseuse comprend une glissière 1. La figure 1 illustre un mode de réalisation d'une telle glissière 1 vue selon une section transverse à l'axe de l'os 7. La glissière 1 présente une section, sensiblement en forme de U. La glissière 1 comprend un fond 10, formant la base du U, et deux montants 11,12. Un premier montant 11 forme une des barres latérales du U et est connecté au fond 10. Une extrémité 17 du fond 10, ici la gauche, est commune avec l'extrémité proximale 17 du premier montant 11. Ce premier montant 11 est prolongé à son extrémité distale 19 par un premier rebord 13 rentrant vers l'intérieur du U. De manière symétrique, un deuxième montant 12 forme l'autre barre latérale du U et est connecté au fond 10. L'autre extrémité 18 du fond 10, ici la droite, est commune avec l'extrémité proximale 18 du deuxième montant 12. Ce deuxième montant 12 est prolongé à son extrémité distale 20 par un deuxième rebord 14 rentrant vers l'intérieur du U. Les deux rebords 13,14 sont sensiblement en regard. Ils laissent entre eux une ouverture 15. Les deux rebords 13,14 sont avantageusement alignés afin que leur surface interne, respectivement leur surface externe, forment un plan d'appui.

Selon le mode réalisation illustré, la section de la glissière 1 présente une forme rectangulaire. Les rebords 13, 14 forment ensemble une interface décrite plus loin et les conditions de planéité et de coplanarité précédentes doivent être respectées. Par contre la forme définie par les autres côtés que sont le fond 10 et les montants 11,12 peut être quelconque. Cette forme de profil peut être rectangulaire, trapézoïdale ouvrante ou refermante, ovoïde ou autre.

Si cette forme de profil présente une dépouille positive, elle peut avantageusement être insérée dans une tranchée 70 pratiquée dans l'os 7 maxillaire ou mandibulaire et présentant un profil simplement complémentaire de la forme extérieure de la glissière 1. Si cette forme de profil présente une dépouille négative, il convient de réaliser un profil de tranchée 70 au moins rectangulaire afin de permettre l'insertion. Un tel profil est ensuite comblé par une colonisation osseuse et conduit avantageusement à une meilleure fixation de la glissière dans la mâchoire.

La glissière 1 est sensiblement prismatique en ce qu'elle se déduit par translation de sa section, telle celle visible à la figure 1, selon une direction sensiblement sécante au plan de la figure.

Bien qu'un tel arrangement puisse accueillir une unique couronne 5, une telle caractéristique est particulièrement avantageuse en ce qu'elle permet de réaliser une glissière 1 de longueur quelconque. Une telle glissière 1 peut ainsi accommoder une zone édentée correspondant à plusieurs dents contigües en fournissant une structure unique pouvant accueillir plusieurs couronnes 5 adjacentes.

Un avantage important d'un tel arrangement est que plusieurs couronnes 5 partagent une unique structure en interface avec l'os 7. Il en résulte une solidité accrue du dispositif, la glissière 1 répartissant les efforts exercés par une couronne 5 sur une zone plus étendue de la mâchoire 7.

Il résulte de cette résistance augmentée que la profondeur de pénétration de la glissière 1 dans l'os 7 peut être sensiblement réduite relativement à un implant vissé mono coronal classique selon l'art antérieur. Aussi, avantageusement, le système implantaire dentaire 100 selon l'invention est particulièrement adapté à des cas où l'os 7 maxillaire ou mandibulaire présente une hauteur osseuse disponible faible. Il peut cependant aussi être utilisé lorsque le volume osseux est important. Il permet alors une intervention moins invasive en ce que la tranchée 70 qui doit être creusée pour implanter la glissière 1 est moins profonde et permettra d'éviter dans de nombreux cas une greffe osseuse.

Le principe d'une glissière 1 permet ainsi de réduire la hauteur de pénétration dans l'os 7. Une glissière 1 selon l'invention présente une hauteur comprise entre 4 et 14mm, préférentiellement entre 6 et 10mm. Des gammes de dimension variée peuvent être proposées au choix du praticien.

De même la largeur peut être variable afin d'accommoder différentes largeur d'os 7. La largeur 23 de la glissière 1 peut être comprise entre 3,5 et 7mm. Des gammes de dimension variée peuvent être proposées au choix du praticien.

La glissière 1 est destinée à être implantée dans l'os 7 maxillaire ou mandibulaire, sensiblement le long de son axe longitudinal. Selon un mode de réalisation la glissière 1 est rectiligne. Cependant l'os 7 maxillaire ou mandibulaire n'est pas nécessairement rectiligne sur toute sa longueur. Aussi est-il avantageux de disposer d'une glissière 1 courbe. Selon un autre mode de réalisation, des glissières 1 monobloc, présentant différentes courbures graduelles sont à la disposition du praticien. Ce dernier peut ainsi choisir une glissière 1 adaptée à la courbure de la partie de mâchoire à traiter.

Selon un autre mode de réalisation, la glissière 1 est réalisée monobloc, mais dans un matériau apte à être courbé. Ainsi le praticien modèle une glissière 1 afin de la conformer à la courbure souhaitée. Il est ainsi avantageusement possible de conformer une telle glissière 1 selon une courbure variable le long de son axe

Selon encore un autre mode de réalisation, une glissière 1 est composée de maillons 24 articulés entre eux. Ainsi, une telle glissière 1 peut être conformée selon une courbure souhaitée. Il est ainsi avantageusement possible de conformer une telle glissière 1 selon une courbure variable le long de son axe. Deux maillons 24 adjacents sont assemblés au moyen d'une articulation 25. Ceci permet de choisir le nombre de maillons 24 constitutifs d'une glissière 1 en fonction d'une longueur souhaitée.

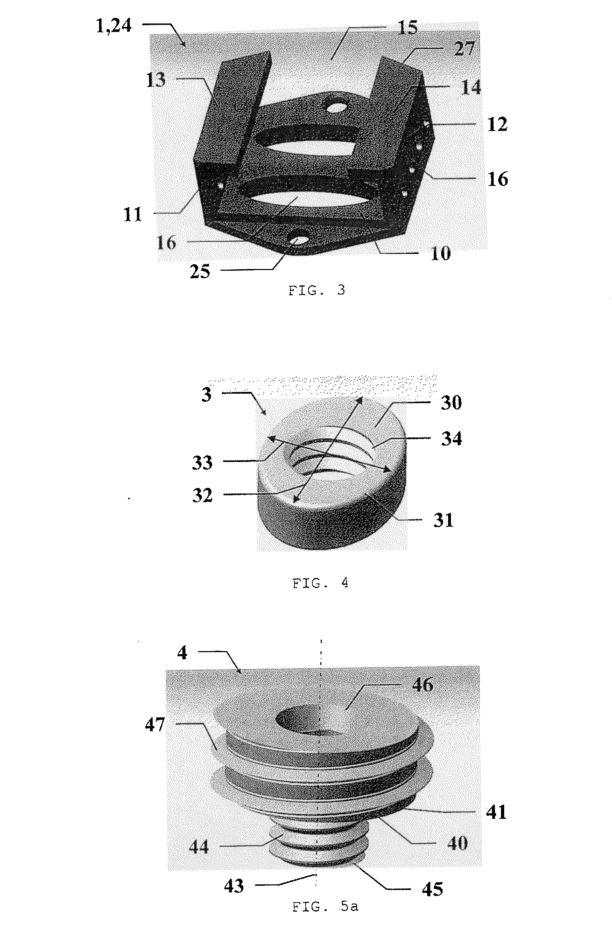

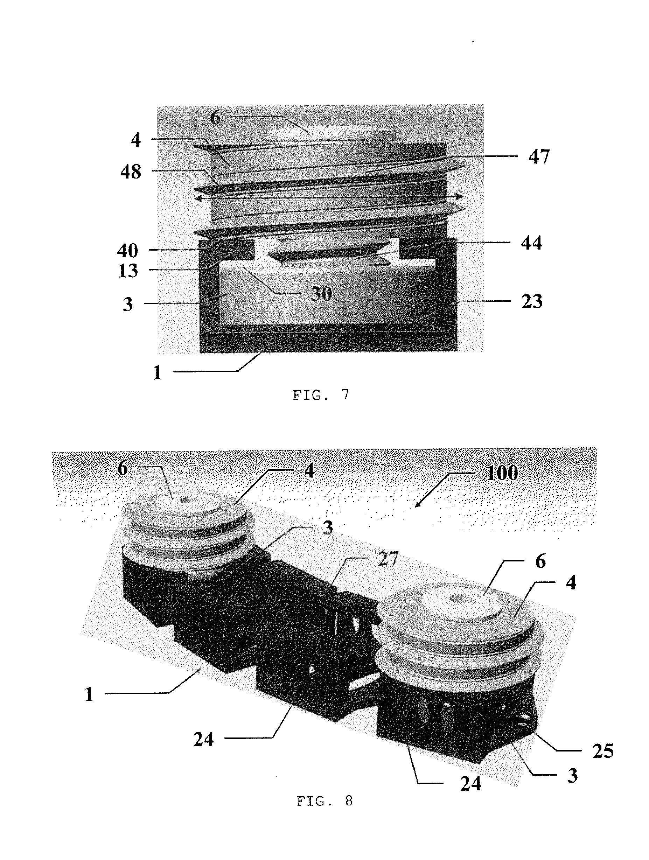

Un exemple illustratif d'une telle glissière 1 apparaît à la figure 8. Un maillon 24 est illustré selon deux points de vue aux figures 2 et 3.

Selon une autre caractéristique, particulièrement visible aux figures 2 et 3, les parois de la glissière 1, le fond 10 et/ou le premier montant 11 et/ou le deuxième montant 12, et préférentiellement toutes les parois 10,11,12 conjointement, sont ajourées et comprennent au moins un trou 16. Ceci vise à faciliter l'ostéo intégration.

Une tranchée 70 est creusée dans l'os 7 sensiblement aux dimensions de la glissière 1. La glissière 1 est ensuite mise en place dans la tranchée 70, de préférence légèrement en force afin d'assurer son immobilisation. Les débris d'os issus du creusement de la tranchée 70 sont récupérés et ensuite utilisés pour remplir les vides apparaissant dans l'intérieur de la glissière 1 entre les supports 4. Ces débris d'os, en conjonction avec les trous 16 permettent, lors de la cicatrisation, à l'os 7 de la mâchoire de coloniser intimement la glissière 1. Ceci permet une bonne intégration de la glissière 1 dans l'os 7 et assure une fondation solide pour la mise en place ultérieure de la ou des couronnes 5.

Selon une autre caractéristique, plus particulièrement visible aux figures 2, 3 et 8, un maillon 24 comporte avantageusement un biseautage 27 à son extrémité à proximité d'un maillon 24 adjacent. Ce biseautage 27 permet l'articulation d'un maillon 24 relativement à un maillon adjacent. Il peut être noté que malgré ce biseautage 27, l'interface formée par les rebords 13,14 présente une continuité au regard des dimensions plus importantes d'un coulisseau 3, les maillons une fois la glissière en place dans la tranchée sont ensuite fermement solidarisés entre eux par des vis serrées aux articulations des maillons.

La glissière 1 ostéo-implantée fournit une fondation solide qui permet la construction d'un système implantaire dentaire 100. La première étape de cette construction consiste à mettre en place la partie intermédiaire 3,4. Cette partie intermédiaire comprend tous les composants disposés entre d'une part la partie endo-osseuse ou implantaire assurant l'interface avec l'os 7 et d'autre part la partie coronaire assurant les fonctions esthétique et masticatoire des dents.

Cette partie intermédiaire 3,4 comprend au moins un coulisseau 3 associé à un support 4. En fonction de sa longueur, une glissière est apte à accueillir un ou plusieurs coulisseaux 3. Un support 4 est associé à chaque coulisseau 4. Pour chaque couronne 5, il est placé un coulisseau 3 et son support 4 associé.

Tel qu'illustré à la figure 4 un coulisseau 3 comporte au moins une face 30 sensiblement plane, ici la face supérieure. Cette face 30 est limitée dans son plan par un contour externe 31 qui présente une plus grande dimension 32, mesurée selon une première direction, strictement supérieure à une plus petite dimension 33, mesurée selon une deuxième direction, différente de la première direction. Ainsi le contour externe 31 présente une extension plus grande selon la première direction que selon la deuxième direction. Ledit contour externe peut présenter une forme de losange plus allongé selon la première direction ou encore une forme ovoïde telle que représenté sur la figure 4.

Avantageusement la plus grande dimension 32 est supérieure à la largeur 21 de l'ouverture 15. Au contraire la plus petite dimension 33 est inférieure à la largeur 21 de l'ouverture 15. Ainsi le coulisseau 3 peut être introduit dans la glissière 1 en passant par l'ouverture 15 lorsque la première direction est sensiblement alignée avec l'axe longitudinal de la glissière 1 et de l'ouverture 15. Au contraire, lorsque la première direction est désalignée d'avec l'axe longitudinal de la glissière 1, le coulisseau 3 présente une dimension plus importante que la largeur 21 de l'ouverture 15 et ne peut pas passer par l'ouverture 15. Les parties de la face plane 30 débordant de la largeur 21 de l'ouverture 15 viennent alors en appui contre la face interne des rebords 13,14.

Un coulisseau 3 comporte encore, sensiblement au centre du contour externe 31, une partie filetée 34, d'axe sensiblement perpendiculaire à la face plane 30.

Selon une autre caractéristique, la plus grande dimension 32 d'un coulisseau est encore supérieure à la distance 22 entre les montants 11,12 de la glissière 1. Ainsi, un coulisseau 3 ne peut avantageusement pas tourner autour de l'axe de la partie filetée 34 en ce qu'il vient buter intérieurement contre les parois des montants 11,12, réalisant ainsi une fonction anti-rotation. Ainsi la partie filetée 34 peut être vissée et serrée avec une partie filetée complémentaire, telle celle présente sur un support 4 en manoeuvrant uniquement le support 4 et sans nécessiter de maintenir en rotation le coulisseau 3.

Une fois mis en place dans la glissière 1 un nombre de coulisseaux 3 souhaités, égal au nombre de couronnes 5 souhaitées, un support 4 est associé et assemblé avec chaque coulisseau 3.

Un support 4, est une pièce sensiblement de révolution. Il comporte à une extrémité 45 une face sensiblement plane 40. De préférence cette face plane 40 est sensiblement perpendiculaire à l'axe de révolution. Elle est limitée dans son plan par un contour externe 41 présentant au moins une dimension, soit une plus grande dimension 42, supérieure à la largeur 21 de l'ouverture 15 de la glissière 1. Un support 4 comporte encore, sensiblement au centre dudit contour externe 41 une partie filetée 44, d'axe sensiblement perpendiculaire à ladite face 40, complémentaire de la partie filetée 34 du coulisseau 3. Ainsi, tel qu'illustré, le coulisseau 3 comprend un trou fileté 34 et le support 4 comprend une vis 44. L'arrangement contraire, non représenté, avec un coulisseau comprenant une vis et un support comprenant un trou fileté complémentaire est aussi possible et est équivalent. Ainsi, par cette extrémité 45, un support 4 peut être assemblé par vissage avec un coulisseau 3. Lors de cet assemblage, la face plane 40 du support 4 vient en contact avec la face externe des rebords 13,14. Le vissage permet une fixation de la partie intermédiaire 3,4 qui enserre, entre la face plane 30 du coulisseau 3 et la face plane 40 du support 4, les rebords 13, 14 et assure ainsi une fixation avec la glissière 1.

Une autre extrémité 46 du support 4, destinée à rester à l'extérieur de la glissière 1, comporte une interface prothétique lui permettant d'être apte à accueillir une couronne 5.

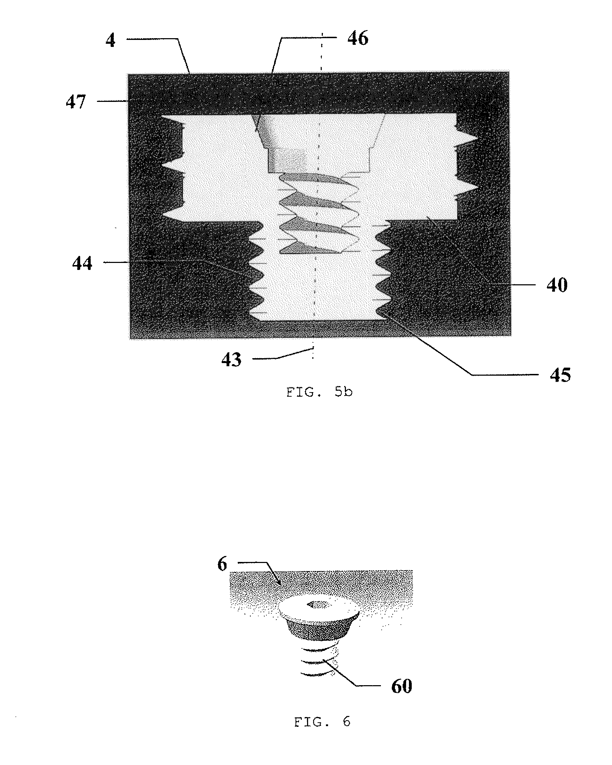

Selon un mode de réalisation avantageux plus particulièrement illustré aux figures 5 et 7, un support 4 comprend encore, dans sa partie médiane située entre ses deux extrémités 45,46, une partie filetée 47, d'axe sensiblement confondu avec l'axe de révolution du support 4 et perpendiculaire à ladite face 40. Le diamètre nominal de cette partie filetée 47 est déterminé de telle manière à ce que les filets viennent engager les parois internes 72 de la tranchée 70 réalisée dans l'os 7. Ainsi dans le cas illustré à la figure 1 d'une tranchée 70 de profil sensiblement rectangulaire, le diamètre nominal de la partie fileté 47 est sensiblement égal à la largeur de la tranchée 70 en regard et donc sensiblement égal à la largeur 23 de la glissière 1. Le diamètre nominal est sensiblement égal à ladite largeur afin que le diamètre hors tout soit légèrement supérieur à ladite largeur. Ainsi, au moins les filets sont aptes à engager l'os 7.

Ainsi, chaque support 4 est, d'une part, fixé à la glissière 1 par vissage avec un coulisseau 3, et est, d'autre part, encore vissé dans l'os 7. Ceci permet de renforcer la fixation et la solidarisation du système implantaire dentaire 100 avec l'os 7.

Selon une autre caractéristique avantageuse, un support 4 comprend encore une interface apte à accueillir un outil de mise en rotation. Cette interface, peut être une fente, un hexagone interne ou externe, un méplat, etc. Elle permet l'emploi d'un outil de type tournevis ou clé pour effectuer le vissage du support 4 relativement au coulisseau 3. Il est rappelé que le coulisseau 3 est avantageusement bloqué en rotation par les montants 11,12 de la glissière 1.

Sur la base d'un support 4 fixé à la glissière 1 et le cas échéant à l'os 7, le système implantaire dentaire 100 peut être fixé à une couronne 5 de sorte de former un dispositif dentaire. Une couronne 5 est placée sur chaque support 4. Une couronne 5 comporte un moyen de fixation 50 apte à être fixé sur l'interface prothétique 46 du support 4. A son autre extrémité, une couronne 5 comprend une partie émergente 51 apte à remplacer une dent, dans ses fonctions masticatoire et esthétique. L'interface prothétique 46 et le moyen de fixation 50 sont complémentaires et peuvent reprendre les standards connus et employés dans le domaine dentaire implantaire. L'interface peut, par exemple, comprendre un cône. La couronne 5 peut être fixée par collage ou par vissage.

Différents modes de réalisation sont possibles. Une couronne 5 peut être assemblée directement sur le support 4. Alternativement une couronne 5 peut encore comprendre plusieurs parties : un pilier fixé sur le support et accueillant une couronne 5 réduite à sa partie émergente.

Il n'est généralement pas possible de mettre en place une couronne 5 immédiatement, simultanément avec la mise en place d'une glissière 1 dans une tranchée 70. Il convient après creusement de la tranchée 70 et mise en place de la glissière 1 de laisser passer un temps d'ostéointégration. La glissière 1 est placée, équipée d'un nombre de coulisseaux 3 assemblés chacun avec un support 4. Les couples comportant un coulisseau 3 et un support 4 sont mis en place à leur position finale au droit de chaque couronne 5. Pour cela, il convient de remarquer qu'un tel couple, assemblé par vissage mais ledit vissage n'étant pas serré, peut coulisser dans la glissière 1 selon son axe longitudinal. Ceci permet avantageusement de régler avec précision la position de chaque support 4 et ainsi la position de chaque couronne 5. Une fois correctement positionné, un tel couple est immobilisé par serrage du vissage.

Ensuite tous les interstices entre coulisseaux 3, supports 4 et glissière 1 sont comblés avec les débris d'os 7 issus du creusement de la tranchée 70 et recyclés et/ou avec un des substituts osseux trouvés dans le commerce de matériaux dentaires ou une association de ces deux éléments. L'ensemble est ensuite protégé par une membrane biocompatible et laissé au repos plusieurs mois afin de cicatriser et pour que l'os 7 puisse coloniser complètement la glissière 1. A l'issue de cette période, les couronnes 5 peuvent être mises en place.

Pendant la phase de cicatrisation, il est avantageux d'obturer l'interface prothétique 46 de chaque support 4. Pour cela, tel que représenté aux figures 6 et 8, un bouchon 6 est employé. Un tel bouchon 6 comporte un moyen de fixation 60 complémentaire de l'interface prothétique 46 du support 4 afin d'être apte à être fixé au support 4 via l'interface prothétique 46. Ainsi l'interface prothétique 46 est obturée et ne risque pas d'être bouchée ou colonisée. Un tel bouchon 6 présente avantageusement un profil bas afin de rester discret et escamoté dans la tranchée 70 durant la cicatrisation.

Un tel bouchon 6 peut être perdu et destiné à être jeté lors du montage final des couronnes 5. Alternativement, le bouchon 6 peut avantageusement être conformé pour être réutilisé comme partie de la couronne 5 afin de permettre la fixation de cette dernière.

Toutes les pièces d'un tel système implantaire dentaire 100, la glissière 1, les coulisseaux 3, les supports 4 et les bouchons 6, de même que les couronnes 5, peuvent être réalisées en tout matériau biocompatible et ostéo-compatible. De manière classique elles peuvent, par exemple, être réalisées en titane grade 4 ou 5 ou en céramique, type zircone ou tout autre matériau biocompatible suffisamment résistant.

## Revendications

1. Un système implantaire dentaire (100) de reconstruction dentaire comprenant une partie endo-osseuse (1) et une partie intermédiaire (3,4), ***caractérisée en ce que*** la partie endo-osseuse (1) comprend une glissière (1) présentant une section, sensiblement en forme de U, comprenant un fond (10) et deux montants (11,12) chacun respectivement connecté à une extrémité (17, 18) du fond (10) par son extrémité proximale et prolongé à son extrémité distale (19,20) par un rebord (13,14) rentrant, les deux rebords (13,14) étant sensiblement en regard et laissant entre eux une ouverture (15).

2. Le système (100) selon la revendication **1,** où ladite glissière (1) présente une longueur permettant d'accueillir au moins deux couronnes (5,6).

3. Le système (100) selon la revendication **2,** où la glissière (1) présente une courbure selon sa longueur, afin de pouvoir s'adapter à une partie courbe d'une arcade maxillaire ou mandibulaire.

4. Le Système (100) selon l'une quelconque des revendications **1** à **3,** où la glissière (1) est monobloc ou est composée de maillons (24) articulés.

5. Le système (100) selon l'une quelconque des revendications **1** à **4,** où le fond (10) et/ou au moins un montant (11,12) est ajouré, de manière à faciliter l'ostéo intégration.

6. Le système (100) selon l'une quelconque des revendications **1** à **5,** où la partie intermédiaire (3,4) comprend au moins un coulisseau (3) comportant au moins une face (30) sensiblement plane limitée dans le plan de cette face par un contour externe (31) présentant une plus grande dimension (32) supérieure à la largeur (21) de l'ouverture (15) et une plus petite dimension (33), inférieure à la largeur (21) de l'ouverture (15), et comportant encore, sensiblement au centre dudit contour externe (31), une partie filetée (34), d'axe sensiblement perpendiculaire à la face (30).

7. Le système (100) selon la revendication **6,** où la partie intermédiaire (3,4) comprend encore, pour chaque coulisseau (3), un support (4), sensiblement de révolution, comportant à une extrémité (45) une face sensiblement plane (40), limitée dans le plan de cette face par un contour externe (41) présentant une plus grande dimension (42) supérieure à la largeur (21) de l'ouverture (15), et sensiblement au centre dudit contour externe (41) une partie filetée (44), d'axe sensiblement perpendiculaire à ladite face (40), complémentaire de la partie filetée (34) du coulisseau (3), et à une autre extrémité (46) une interface prothétique.

8. Le système (100) selon la revendication **7,** où un support (4) comprend encore, entre ses deux extrémités (45,46), une partie filetée (47), d'axe sensiblement confondu avec l'axe de révolution du support (4), de diamètre nominal sensiblement égal à la largeur (23) de la glissière (1).

9. Le système (100) selon l'une quelconque des revendications **1** à **8,** comprenant encore un bouchon (6) comportant un moyen de fixation (60) apte à être fixé sur une interface prothétique (46) du support (4).

10. Un dispositif comprenant :
i) un système implantaire dentaire (100) tel que défini à l'une quelconque des revendications **1** à **8,** et
ii) une couronne (5,6), laquelle couronne (5,6) comprend de préférence un moyen de fixation (50) apte à être fixé sur une interface prothétique (46) du support (4) et une partie émergente (51) apte à remplacer une dent.
